# EUROPÄISCHE PATENTSCHRIFT

(11) **EP 1 810 811 B1**
(45) Veröffentlichungstag und Bekanntmachung des Hinweises auf die Patenterteilung: **31.03.2010**
(21) Anmeldenummer: 07000667.1
(22) Anmeldetag: 15.01.2007
(51) Int. Cl.: B29C 45/16, B29C 33/72, B29C 45/00, B29C 45/04

(54) **Verfahren und Vorrichtung zur Herstellung eines Formteils aus mindestens zwei unterschiedlichen Kunststoffen**
Method and device for producing a moulded part made of at least two different plastics
Procédé et dispositif destinés à la fabrication d'un élément de formage à partir d'au moins deux matières plastiques différentes

(30) Priorität: 24.01.2006 DE 102006003540
(43) Veröffentlichungstag der Anmeldung: 25.07.2007
(73) Patentinhaber: Adcuram Maschinenbauholding GmbH, 80333 München (DE)
(72) Erfinder: Eckardt, Helmut, 58540 Meinerzhagen (DE); Kleba, Ingo, 53639 kÖNIGSWINTER (DE); Wirth, Jürgen, 51147 Köln (DE); Pawlik, Wolfgang, 50735 Köln (DE); Begemann, Michael, 92272 Freudenberg/Lintach (DE); Berthold, Joachim, 51645 Gummersbach (DE)
(74) Vertreter: Gosdin, Michael

(56) Entgegenhaltungen:
- EP-A- 1 512 511
- JP-A- 2004 098 511

## Beschreibung

Die Erfindung betrifft ein Verfahren zur Herstellung eines Formteiles aus mindestens zwei unterschiedlichen Kunststoffen, das die Schritte umfasst:
a1) Plastifizieren eines ersten Kunststoffmaterials in einer Plastifizier- und Einspritzschnecke;
a2) Einspritzen der gemäß Schritt a1) plastifizierten Kunststoffinasse in eine erste Kavität eines ersten Kunststoffwerkzeuges zur Herstellung eines Vorformteils, wobei das erste Kunststoffwerkzeug eine erste und eine zweite Werkzeughälfte aufweist;
a3) Öffnen des ersten Kunststoffwerkzeuges, wobei das erzeugte Vorformteil auf einer der Werkzeughälften verbleibt;
b) Bewegen der das Vorformteil tragenden Werkzeughälfte in eine Position, die eine zusammenwirkende Verbindung mit einer Werkzeughälfte eines zweiten Kunststoffwerkzeugs ermöglicht;
c) Aufbringen eines weiteren Kunststoffs auf das Vorformteil,
wobei die Werkzeughälfte des zweiten Kunststoffwerkzeugs Bestandteil einer Werkzeug-Vorrichtung mit einer Mehrzahl von Werkzeughälften ist, wobei die Werkzeug-Vorrichtung so gedreht und/oder verschoben wird, dass eine Werkzeughälfte des zweiten Kunststoffwerkzeugs unter Bildung einer zweiten Kavität zum Zusammenwirken mit einer Werkzeughälfte des ersten Kunststoffwerkzeug gebracht werden kann, so dass der weitere Kunststoff gemäß Schritt c) auf das Vorformteil aufgebracht werden kann.

Des Weiteren betrifft die Erfindung eine Vorrichtung zur Herstellung eines Formteiles.

Ein Verfahren der gattungsgemäßen Art ist aus der JP 2004 098511 A bekannt. Ein anders geartetes Spritzgießverfahren offenbart die EP 1 512 511 A2, bei dem allerdings auch ein Spritzgießwerkzeug zum Einsatz kommt, von dem Teile um eine vertikale Achse gedreht werden können.

Die Herstellung von Formteilen mittels des Spritzgießverfahren ist seit langem bekannt. Man kennt verschiedene Verfahren, mit denen Thermoplaste, Duroplaste und Elastomere zu hochwertigen Formteilen verarbeitet werden können. Diese Kunststoffe liegen in der Regel in fester Form, z. B. als Granulat, vor. Es werden aber auch viskose Kunststoffe - beispielsweise beim sog. LIM-Verfahren - als zwei getrennte Komponenten verarbeitet, die vermischt werden. Mit dem Spritzgießverfahren kann ein großes Spektrum von Formteilen hergestellt werden, das einen Formteilgewichtsbereich von weniger als 0,001 g bis hin zu 60 kg und mehr umfasst.

Ein besonderer Vorteil der Spritzgießtechnik liegt in der großen Auswahl der zu verarbeitenden Kunststoffe. Die hohe Automatisierung bei der Produktion und die nacharbeitsfreie Herstellung der Formteile, insbesondere bei der Verarbeitung von thermoplastischen Kunststoffen ist ein weiterer Vorteil. Die Formteile aus Thermoplasten werden aus hochwertigen Werkzeugen frei von irgendwelchen Graten und Schwimmhäuten entformt. Ein Einsprühen der mit dem Kunststoff in Berührung kommenden Flächen mit Trennmitteln ist in den meisten Fällen nicht erforderlich.

Es ist beim Spritzgießen bekannt, dass zwei und mehr Kunststoffe, unterschiedlich in Farbe und/oder Eigenschaften, im Spritzgießverfahren miteinander verbunden werden, um Formteile mit besonderen Eigenschaften herzustellen. So ist es auch bekannt, dass harte Thermoplaste mit festen mechanischen Eigenschaften mit weichen Thermoplasten, z. B. TPE und TPU, in den verschiedenen Zwei- und Mehrkomponenten-Verfahren zu Formteilen mit harten und weichen Bereichen verarbeitet werden. Es können im Spritzgießverfahren auch Thermoplaste, Duroplaste und/oder Elastomere mit den bekannten Verfahren im Verbund hergestellt werden.

Beispielsweise beim Spritzgießen von Thermoplasten wird der eingespritzte Kunststoff im Werkzeug abgekühlt. Die Kühlzeit ist abhängig vom Kunststoff, der Wanddicke des Formteils und den Verarbeitungsbedingungen. Zeiten für die Vorbereitung des Werkzeuges vor dem Spritzgießen sind üblicherweise nicht erforderlich.

Beim Spritzgießen treten beim Einspritzen hohe Werkzeuginnendrücke auf, die im Bereich von ca. 50 bis mehr als 700 bar liegen.

Die Verarbeitung von Polyurethanen (PU) erfordert eine ganz andere Technologie:

Die aus mindestens zwei Komponenten bestehenden PU-Systeme liegen als niedrigviskose Flüssigkeiten vor. Die Flüssigkeiten werden üblicherweise mittels Pumpen gefördert und vor der Einbringung in das Formnest intensiv vermischt. Nach einer vom System und den Verarbeitungsbedingungen abhängigen Zeit beginnt eine chemische Reaktion, die die Aushärtung des eingefüllten Polyurethans bewirkt.

Aufgrund der niedrigen Viskosität beim Einfüllen ins Werkzeug fließt das Polyurethan auch in engste Spalte im Werkzeug. Eine schwimmhautfreie Herstellung der Formteile unter Produktionsbedingungen ist deshalb beim heutigen Stand der Technik praktisch nicht möglich.

Bei der PU- Technik setzt nach der Füllung der Werkzeugkavität nach einer bestimmten Zeit eine chemische Reaktion ein, die zum Aushärten und Verfestigen des eingefüllten Polyurethans führt. Da Polyurethan eine große Affinität zu Metallen und anderen Stoffen hat und auch als Kleber verwendet wird, ist die Verwendung von Trennmitteln für eine problemlose Entformung der Formteile zumeist erforderlich. Es wir also vor dem Einfüllen des Kunststoffes üblicherweise ein Trennmittel auf die mit dem Polyurethan in Verbindung kommenden Formnestoberflächen aufgetragen, das eine bestimmte Zeit ablüften muss. Erst danach kann das Polyurethan eingebracht werden.

Nach der Entformung des fertigen Formteils muss üblicherweise das Werkzeug von Rückständen befreit werden, was meist mechanisch geschieht.

Mit dem Inmould Coating Verfahren (IMC) wird zunächst eine PU-Schicht in der Kavität aufgetragen, die die gewünschten Oberflächeneigenschaften aufweist. Danach wird auf diese Schicht das PU aufgetragen. Es können auch mehrere PU-Schichten, auch unterschiedlich in Farbe und PU-System, aufgebracht werden.

Es gibt also eine große Auswahl an unterschiedlichen PU-Systemen. In jedem Fall handelt es sich jedoch um Flüssigkeiten, die vor der Verarbeitung eine niedrigere Viskosität als die im Spritzgießverfahren verarbeiteten Thermoplaste aufweisen.

Beim PU-Verfahren betragen die Werkzeuginnendrücke nur wenige bar und gehen bis max. ca. 50 bar. Man kann sagen, dass die Werkzeuginnendrücke bei der PU- Verarbeitung um ca. eine Zehnerpotenz niedriger als beim Spritzgießen liegen.

Beide Systeme in einem Formteil zu nutzen bietet folglich einige Vorteile.

Es ist unter anderem ein Verfahren bekannt, bei dem zunächst in einem ersten Verfahrensschritt das Thermoplast-Formteil gespritzt wird. Nach Öffnen des Werkzeuges wird das Formteil mit einer anderen Werkzeughälfte in Kontakt gebracht, die die Oberfläche für das PU erzeugt. Diese Werkzeugoberfläche wurde zunächst mit Trennmittel versehen. Nach dem Schließen der Werkzeughälften mit dem dazwischen befindlichen Spritzgießteil wird das Polyurethan eingebracht. Nach Abschluss der Reaktionszeit und der Aushärtung des Polyurethans wird das Werkzeug wieder geöffnet.

Es ist auch bekannt, spritzgegossene Formteile herzustellen und in einem zusätzlichen separaten Arbeitsgang mit einem im PU-Verfahren aufgebrachten Polyurethan zu versehen. Genauso ist es auch bekannt, zunächst den PU-Verarbeitungsschritt und danach erst den Spritzgießschritt folgen zu lassen oder umgekehrt. Das jeweils als erstes hergestellte Formteil wird nachträglich in den zusätzlichen Arbeitsschritt mit dem zweiten Kunststoff versehen.

Auch bei weichen thermoplastischen Kunststoffen sind jedoch der Weichheit der Oberfläche, auch bei einer Schaumstruktur im Inneren, Grenzen gesetzt.

Genauso ist es auch denkbar, dass im Spritzgießverfahren verarbeitete weiche Kunststoffe mit harten im PU-Verfahren verarbeiteten PU-Systemen verbunden werden, um besondere Produkteigenschaften zu erzielen.

Eine Schwierigkeit der Verbindung beider Rohstoffsysteme zu qualitativ hochwertigen und kostengünstig herzustellenden Formteilen liegt jedoch in den völlig unterschiedlichen Verarbeitungstechniken.

Durch die Unterschiede der Verarbeitungstechniken ergibt es sich, dass die Herstellzeiten für den PU- Prozess meist länger als für den Spritzgießprozess sind.

Nachteilig ist, dass es sich bei den bekannten Verfahren im Wesentlichen um separate, d. h. getrennte Herstellungsprozesse (Spritzgießen und Polyurethanspritzen) handelt, die nicht direkt miteinander verbunden sind. Daraus folgt, dass sich die beiden Herstellzeiten für das Spritzgießformteil und für das PU-Formteil addieren und sich damit eine sehr lange gesamte Herstellzeit für ein komplettes Formteil ergibt. Zusätzlich gehen noch die für den PU-Prozess erforderlichen Nebenzeiten in die Gesamtherstellzeit eines Formteils ein, wie Trennmittel aufbringen, Ablüften, Werkzeug Reinigen etc.

Die Verbindung der Vorteile beider Verarbeitungstechniken ist deshalb aus mehreren Gründen erstrebenswert.

**Aufgabe** der Erfindung ist es daher, ein Verfahren zu schaffen, mit dem Formteile nach dem Spritzgießverfahren und dem PU-Verfahren im Verbund hergestellt werden können. Ein Zwischenlagern zwischen dem Prozess des Spritzgießens und dem der PU-Verarbeitung ist dabei zu vermeiden. Weiterhin wird angestrebt, die vorbereitenden Prozesse des PU-Verfahrens aus dem eigentlichen Herstellungsprozess des PU-Teiles auszulagern, sowie eine diesbezügliche Vorrichtung anzubieten. Damit soll insgesamt eine deutlich wirtschaftlichere Fertigung der erfindungsgegenständlichen Formteile möglich werden.

Die **Lösung** dieser Aufgabe ist verfahrensgemäß in Verbindung mit dem Oberbegriff des Anspruches 1 dadurch gegeben, dass der nach obigem Schritt c) aufgebrachte weitere Kunststoff Polyurethan ist oder aufweist, wobei über einen in der Werkzeug-Vorrichtung integrierten Mischkopf das Polyurethan in die zweite Kavität eingebracht wird.

Bei der Werkzeug-Vorrichtung kann es sich um eine Dreh- und/oder Schiebevorrichtung handeln oder zum einen Block mit einer Anzahl von Werkzeughälften.

Vorgesehen ist also, dass zum Aufbringen der weiteren Kunststoffschicht eine Werkzeug-Vorrichtung mit mehreren Werkzeughälften so gedreht und/oder verschoben wird, dass eine dieser Werkzeughälften mit vorzugsweise der zweiten Werkzeughälfte des ersten Kunststoffwerkzeuges eine zweite Kavität bildet, wobei über einen in die Werkzeug-Vorrichtung integrierten Mischkopf das Polyurethan in die zweite Kavität eingebracht wird.

Es werden nur die eigentlich formgebenden Prozesse sowohl beim Spritzgießen als auch beim PU-Verfahren gleichzeitig ausgeführt. Das Spritzgießteil wird nach seiner Herstellung nach einer der beim Spritzgießen bekannten Techniken, wie z. B. mit Drehwerkzeug, Rundtisch, Wendeplatte, Indexplatte, Indexarm, durch Umsetzen oder andere bekannten Lösungen, mit der für das Polyurethan benötigten Kavität in Verbindung gebracht.

Alle für die Polyurethan-Herstellung erforderlichen Arbeitsschritte werden aus der den Zyklus bestimmenden Zeit herausgenommen. Dies wird dadurch erreicht, dass die PU-spezifischen Nebenarbeitsgänge, die nichts mit dem eigentlichen formgebenden Prozess zu tun haben, aus dem Herstellprozess herausgenommen werden.

Daher ist fortbildungsgemäß vorgesehen, während des obigen Verfahrenschritts c) eine der Werkzeughälften der Werkzeug-Vorrichtung zu reinigen, ein Trennmittel aufzubringen, das fertige Formteil von einer der Werkzeughälften der Werkzeug-Vorrichtung zu entnehmen und/oder eine erste Polyurethanschicht aufzutragen.

Unter Beachtung der Zeiten, die sich für die einzelnen für den PU-Prozess erforderlichen Arbeitsschritte ergeben, werden somit bestimmte Arbeitsschritte so zusammengefasst, dass sie etwa gleichlange Zeitblöcke ergeben. Dadurch ergeben sich mehrere ca. gleichlange Prozessfolgen, die zwar bezogen auf den Prozess nacheinander ablaufen, durch die aus dem formgebenden Prozess ausgelagerten Stationen aber gleichzeitig bearbeitet werden können.

Der Herstellprozess des PU-Teils kann auf unterschiedliche Weise erfolgen: Es können z. B. eine oder mehreren PU-Schichten direkt in die Kavität eingegeben werden oder nach dem oben beschriebenen IMC-Verfahren aufgebracht werden.

Zwei Beispiele, wie Arbeitsschritte zu etwa gleichlangen Zeitblöcken zusammengefasst werden können, sehen wie folgt aus:

### Beispiel 1:

a: Entnehmen des fertigen Formteils (Spritzgießen und PU)
b: Reinigen des Werkzeuges
c: Eintrennen und Ablüften
d: Mischkopf oder Mischköpfe andocken und PU einbringen

### Beispiel 2:

a: Entnehmen des fertigen Formteils und Werkzeugreinigung
b: Eintrennen und Ablüften
c: Mischkopf für IMC, Einbringen des PU für IMD und Ablüften
d: Mischkopf oder Mischköpfe andocken und PU einbringen

Die einzelnen Arbeitsschritte a bis d, in diesem Fall vier Schritte, benötigen alle in etwa die gleiche Zeit. Für jeden einzelnen Arbeitsschritt ist eine PU-Werkzeughälfte vorgesehen. So sind z. B. bei vier Arbeitsschritten vier gleiche Werkzeughälften, die nacheinander mit den Spritzgießhälften in Verbindung kommen, erforderlich.

Je nach System können einzelne Prozessschritte zusätzlich erforderlich sein oder auch entfallen. So können z. B. das Eintrennen und das folgende Ablüften bei bestimmten PU- Systemen entfallen. Dadurch kann sich eine andere Anzahl oder Zusammenfassung der einzelnen Arbeitsschritte als sinnvoll ergeben. Es kann auch sinnvoll sein, anstelle von vier Blöcken nur zwei oder drei oder auch mehr als vier Prozessblöcke zeitlich sinnvoll zusammenzufassen.

Die vorgeschlagene Vorrichtung zur Herstellung eines Formteiles aus mindestens zwei unterschiedlichen Kunststoffen sieht erfindungsgemäß vor, dass eine Anzahl Werkzeughälften des zweiten Kunststoffwerkzeugs an einer beweglichen Werkzeug-Vorrichtung angeordnet ist, wobei die Werkzeug-Vorrichtung einen Mischkopf für Polyurethan umfasst, um über diesen die Kavität zu versorgen, die von einer Werkzeughälfte des zweiten Kunststoffwerkzeugs und einer Werkzeughälfte des ersten Kunststoffwerkzeugs gebildet wird.

Die andere Werkzeughälfte ist also an einer Werkzeug-Vorrichtung mit weiteren identischen anderen Werkzeughälften angeordnet, wobei die Werkzeug-Vorrichtung einen Mischkopf für Polyurethan umfasst.

Die verschiedenen Arbeits- oder Prozessblöcke bzw. Prozessstationen können vorteilhaft den verschiedenen Werkzeughälften der Werkzeug-Vorrichtung zugeordnet werden, wobei als Werkzeug-Vorrichtung eine sich drehenden Platte oder ein Block vorgesehen werden kann, der entsprechend den Arbeitsblöcken mehrere Stationen hat, z. B. 2, 3, 4 oder auch mehrere Stationen. Die genannte Werkzeug-Vorrichtung kann über eine vertikale, horizontale oder anders angeordnete Achse eine Rotations- und/oder auch eine translatorische Bewegung ausführen.

Es ist auch denkbar, die verschiedenen Stationen in anderer Weise so verfahrbar zu gestalten, dass sie mit der jeweiligen Spritzgießform des Spritzprozesses in Eingriff kommen können. So sind auch Einheiten mit translatorischen Bewegungen (Schiebetische) oder auch Einheiten mit translatorischen und rotatorischen Bewegungen in verschiedenen Kombinationen denkbar.

Zum Spritzgießen sind eine düsenseitige stationäre Werkzeughälfte und zwei schließseitig angeordnete Werkzeughälften erforderlich, die nacheinander mit den verschiedenen PU-Werkzeughälften auf der Einheit mit den drehbaren oder verschiebbaren Prozessblöcken in Verbindung kommen. Zum Wechseln der spritzgegossenen Formteile in die PU-Position können Maschinen mit Drehtischen mit horizontaler, vertikaler oder anders gerichteter Drehachse verwendet werden. Für große Formteile haben sich besonders Maschinen bewährt, die mit einer vorzugsweise um eine senkrechte Drehachse schwenkbaren Wendeplatte ausgeführt werden. Es ist auch denkbar, das Wechseln der spritzgegossenen Formteile in die PU-Position durch translatorische Bewegungen über Wechseleinheiten, Schiebetische oder ähnliches durchzuführen.

Es kann auch ein Wechseln oder Umsetzen der Formteile von der Spritzgießin die PU-Position, z. B. mit Hilfe von Automatisierungskomponenten (Handhabungsgeräte, Roboter) erfolgen. Auch sind Kombinationen von Rotations- und Translationsbewegungen möglich.

Daher ist fortbildungsgemäß vorgesehen, dass die bewegbare Werkzeughälfte des ersten Werkzeuges durch eine Rotation und/oder Translation bewegbar ist, wodurch es sich anbietet, die bewegbare Werkzeughälfte als Drehtisch oder als Wendeplatte auszuführen.

In einer weiteren Fortbildung wird vorgeschlagen, dass die Werkzeug-Vorrichtung mit den anderen Werkzeughälften durch eine Rotation und/oder Translation bewegbar ist.

Durch diese Ausgestaltung der Vorrichtung wird es ermöglicht, in den Prozess auch noch andere Arbeitsgänge einzubringen. So ist z. B. eine Corona-Behandlung oder eine Open-Air-Plasma-Behandlung zwischen dem Spritzen und dem PU-Prozess denkbar. Ein solcher Schritt kann die Haftung zwischen dem spritzgegossenen und dem aus Polyurethan gegossenen Formteil verbessern. Die Zusammenfassung der einzelnen Arbeitsschritte zu mehreren möglichst zeitgleichen Prozessblöcken erfolgt entsprechend.

Die spritzgegossenen Träger oder Grundkörper können aus Thermoplasten, Duroplasten oder Elastomeren, hergestellt werden, wobei diese gefüllt oder verstärkt sein können.

Die spritzgegossenen Formteile können kompakt aus einer oder mehreren Komponenten und/oder mit Fluid-Unterstützung gespritzt werden. Als Fluide können Gase und Flüssigkeiten zum Einsatz kommen. So können die Formteile unter Zugabe von chemischen Treibmitteln geschäumt werden. Es können auch physikalische Treibmittel wie Stickstoff oder Kohlendioxid (N₂ oder CO₂) oder andere Treibmittel in den Schneckenzylinder oder vor Eintreten des Kunststoffes in die Werkzeugkavität eingespritzt werden. Auf diese Weise werden Strukturschaum-Formteile mit einer kompakten Haut und einem geschäumten Kern erzeugt.

Zur Verbesserung der Oberfläche kann vor oder während der Einspritzung im Werkzeug ein Gasgegendruck aufgebaut werden, z. B. bei der Verarbeitung treibmittelhaltiger Thermoplaste, der ein vorzeitiges Aufschäumen verhindert. Auch können die Werkzeuge mindestens partiell zyklisch beheizt und gekühlt werden (Variotherm-Verfahren), oder durch z. B. Isolierschichten kann ein plötzliches Abkühlen der Schmelze mit dem Ziel der besseren Formteiloberflächen eingesetzt werden.

Es kann auch ein Fluid so eingespritzt werden, dass es einen oder mehrere gezielte Hohlräume im Formteil aufweist. Dabei können alle Verfahren der Fluidinjektionstechnik, wie z. B. die Gasinjektionstechnik (Gasinnendruck- und/oder Gasaußendruck-Verfahren) und die Wasserinjektionstechnik zur Anwendung kommen. Durch Verwendung der 2- oder Mehr- Komponententechniken können die Spritzgieß-Vorformlinge auch aus unterschiedlichen Rohstoffen und Rohstoff- Kombinationen bestehen. Dabei können die beim Spritzgießen bekannten Verfahren verwendet werden. Werden die Vorformlinge durch Verwendung der Ko-Injektions- oder Sandwichtechnik gespritzt, ist ein dreischichtiger Aufbau der Teile zu erzielen, wobei Haut und Kern aus gleichen oder unterschiedlichen Rohstoffen, geschäumt oder kompakt, sein können. Die Formteile können gespritzt oder spritzgeprägt nach den bekannten Verfahren der Spritzprägetechnik hergestellt werden.

Auch weitere hier nicht näher beschriebene bekannte Verfahren der Spritzgießtechnik können zur Anwendung kommen. Auf diese ist das neue Verfahren ebenfalls anwendbar. Auch eine Kombination der unterschiedlichen Verfahren mit den verschiedenen Rohstoffkombinationen ist möglich.

Als Polyurethan-Typen kann eine große Anzahl unterschiedlicher Systeme verwendet werden. Z. B. können aromatische und aliphatische Systeme verwendet werden. Gefüllte und verstärkte Typen, kompakt oder geschäumt (z. B. Integralschaum) können gleichermaßen zum Einsatz kommen. Auch Kombinationen der unterschiedlichen Systeme sind möglich.

Das vorgeschlagen Verfahren bietet folgende Vorteile:

Durch Auswahl der entsprechenden Kunststoffe, die auch gefüllt oder verstärkt sein können, können sehr biegesteife Formteile hergestellt werden.

Mit Polyurethan können Formteile z. B. mit einer weichen, griffelastischen Oberfläche erzeugt werden.

Die Verbindung beider Techniken in einem Arbeitsgang mit Hilfe des Mehrkomponenten-Spritzgießverfahrens ermöglicht z. B. die Herstellung von Formteilen mit sehr guten mechanischen Eigenschaften und einer weichen Oberfläche mit hervorragender Haptik.

Wenn das PU-System zu einem Integralschaumstoff geschäumt wird, hat die erzeugte PU-Oberfläche eine geschlossene Haut und einen geschäumten Kern. Dadurch wird bei guter Haptik eine besonders weiche, federnde Oberfläche erzeugt

Das vorgeschlagene Verfahren und die entsprechende Vorrichtung ermöglichen die kostengünstige Herstellung hochwertiger Produkte unter Beachtung der prozessspezifischen Besonderheiten.

In den Zeichnungen sind schematisch Ausführungsbeispiele der erfindungsgemäßen Vorrichtung sowie der Formteile wiedergegeben.
- Fig. 1: zeigt eine Anordnung zur Herstellung eines Formteils aus mindestens zwei unterschiedlichen Kunststoffen, von denen eines Polyurethan ist,
- Fig. 2: zeigt einen Teil des Formteils ohne Umbug,
- Fig. 3: zeigt einen Teil des Formteils mit Umbug und
- Fig. 4: zeigt einen Teil des Formteils mit Umbug und Abdichtung.

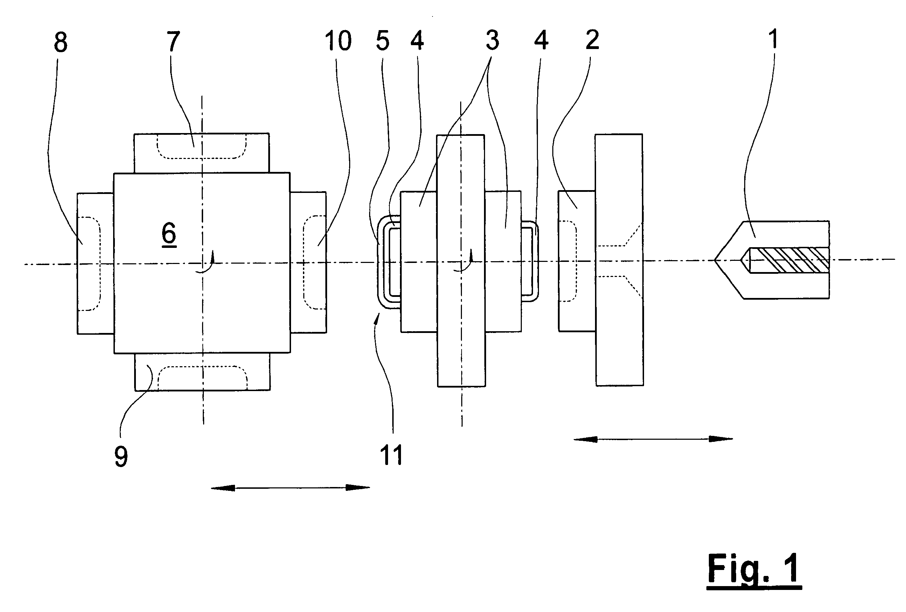

In Figur 1 ist schematisch der Aufbau einer Vorrichtung zur Herstellung eines Formteils dargestellt. Eine Plastifizier- und Einspritzschnecke 1 wird in bekannter Weise an die Düsenseite eines Spritzgießwerkzeugs zur Herstellung eines Formteils angesetzt. An einer Düsenplatte ist eine erste Werkzeughälfte 2 eines Spritzgießwerkzeugs angeordnet, die mit der bewegbaren Werkzeughälfte 3, die hier drehbar dargestellt ist, durch translatorisches Verschieben in Verbindung gebracht wird, wodurch eine erste Kavität gebildet wird, in der ein erstes Kunststoffteil 4 im Spritzgießverfahren gefertigt wird, wobei Werkzeuginnen-Drücke von ca. 300 bar herrschen.

Nach dem Öffnen des Werkzeugs verbleibt das erste Kunststoffteil 4 auf der zweiten Werkzeughälfte 3. Durch eine Drehung um 180° um eine Achse, die auf der Zeichenebene senkrecht steht, wird die Werkzeughälfte 3 in eine Position gebracht, die das Zusammenführen mit einer der Werkzeughälften 7, 8, 9, 10 ermöglicht, die an einer Werkzeug-Vorrichtung 6 angeordnet sind.

In Fig. 1 ist das Zusammenwirken mit der Werkzeughälfte 10 dargestellt. Die weiteren Werkzeughälften 7, 8 und 9 sind frei zugänglich, so dass dort vorbereitende Maßnahmen wie Eintrennen, Ablüften, Reinigen, etc., durchgeführt werden können.

Um eine zweite Kunststoffschicht 5 in Form von Polyurethan aufzubringen, wird die Werkzeug-Vorrichtung so verschoben, bis die weitere Werkzeughälfte 10 mit der zweiten Werkzeughälfte 3 eine zweite Kavität gebildet hat. Über einen in die Werkzeug-Vorrichtung 6 integrierten Mischkopf (nicht dargestellt) wird das Polyurethan eingebracht, wodurch das fertige Formteil 11 entsteht. Dies geschieht bei einem Werkzeuginnen-Druck von ca. 30 bar.

Die zweite Werkzeughälfte 3 ist doppelt an einem Drehgestell angeordnet, sowohl die Düsenplatte mit der ersten Werkzeughälfte 2 als auch die Werkzeug-Vorrichtung 6 sind auf das drehbare Mittelteil zu- und wegbewegbar, was durch die beiden Doppelpfeile gekennzeichnet ist.

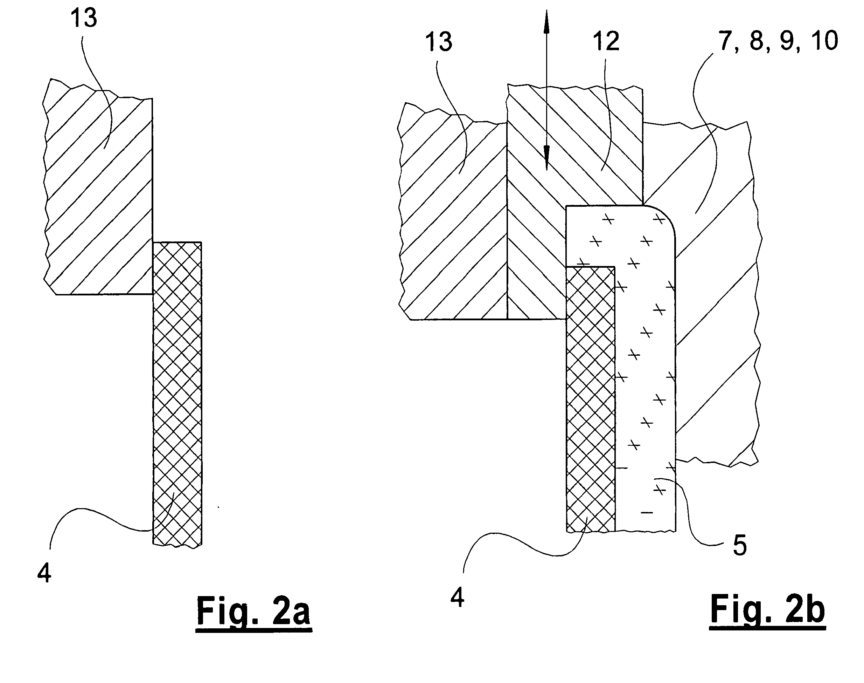

Die Figuren 2 bis 4 zeigen mögliche Ausführungen der Werkzeuge bzw. des Formteiles.

Figur 2 zeigt eine Version ohne einen Umbug des Polyurethan-Bereichs. Schematisch ist ein Teil 13 der zweiten Werkzeughälfte 3 angedeutet, an dem das erste Kunststoffteil 4 liegt (Fig. 2a). Nach dem Verschwenken und dem Zusammenbringen mit den weiteren Werkzeughälften der Werkzeug-Vorrichtung 6 befindet sich zwischen dem Teil 13 und dem ersten Kunststoffteil 4 ein Abstand, in den ein Schieber 12 eingebracht wird. Eine der weiteren Werkzeughälften 7, 8, 9 oder 10 bilden den Rest der Kavität, so dass die zweite Kunststoffschicht 5 eingebracht werden kann (Fig. 2b).

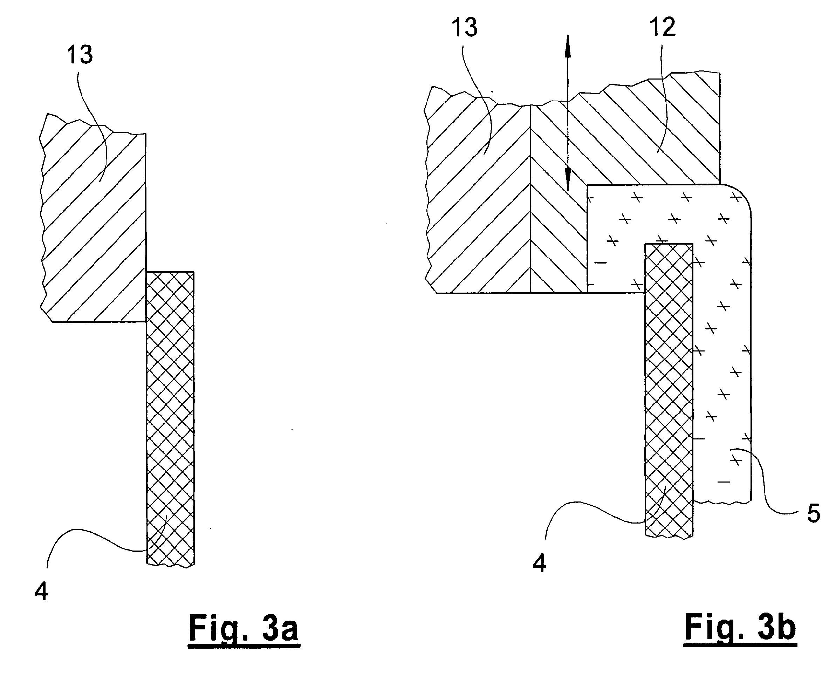

Figur 3 zeigt eine weitere Ausgestaltung des Formteils, diesmal mit Umbug. Figur 3a entspricht Figur 2a, und in Fig.3b ist wiederum das erste Kunststoffteil 4 vom Teil 13 beabstandet. In diesem Falle ist der Schieber 12 etwas anders ausgeführt, so dass die zweite Kunststoffschicht 5 die erste Kunststoffschicht umgreifen kann.

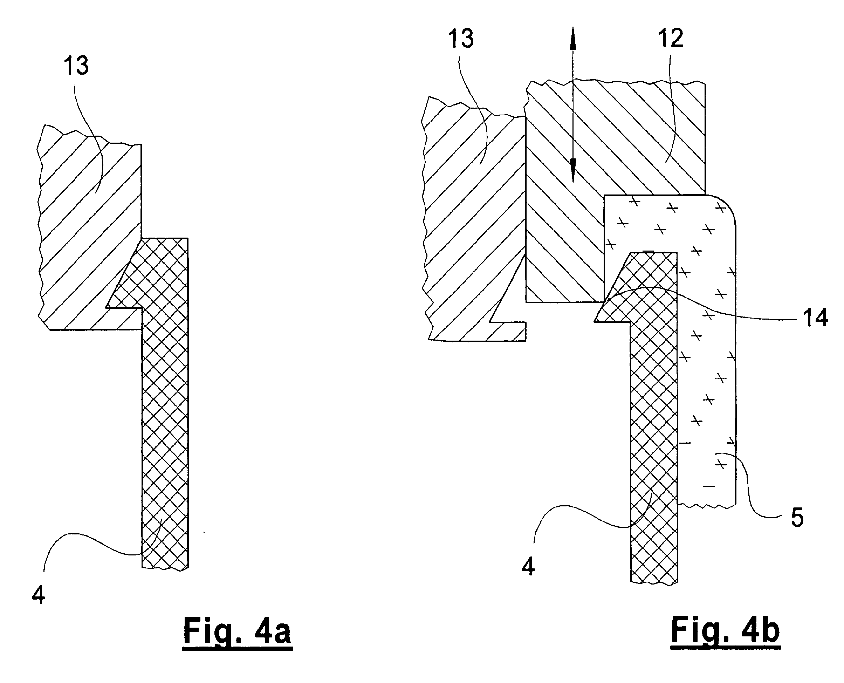

Bei manchen Formteilen kann es erforderlich sein, eine Art Dichtung herzustellen, damit das Polyurethan das Werkzeug nicht unnötig verunreinigt. Figur 4 zeigt hier eine mögliche Lösung. Wiederum ist in Fig. 4a der Teil dargestellt, in dem das erste Kunststoffteil 4 gefertigt wird. Es unterscheidet sich gegenüber den Teilen gemäß Figur 2 und 3 dadurch, dass ein Vorsprung in Form einer Lippe mit gespritzt wird.

Figur 4b stellt wieder den PU-Fertigungsschritt dar. Teil 13 ist vom ersten Kunststoffteil 4 beabstandet, der Schieber 12 ist an das erste Kunststoffteil 4 so verfahren worden, dass er einen Dichtbereich 14 bildet. Die anschließend eingebrachte zweite Kunststoffschicht 5 wird somit über den Dichtbereich 14 zum Bereich der zweiten Werkzeughälfte 3 abgedichtet.

Die Ausbildung der Werkzeuge für das Spritzgießen und das PU-Verfahren muss also entsprechend den Erfordernissen der Verfahren und bezüglich der Rohstoffe und Rohstoffsysteme erfolgen. So wird das Formnest z. B. bei Integralschaum bevorzugt von unten gefüllt werden. Auch empfiehlt es sich bei diesen Systemen, die Kavität besser zu entlüften als bei kompakten PU-Systemen.

Zumindest über eine Werkzeughälfte kommen die beiden unterschiedlichen Verfahren Spritzgießen und PU-Reaktionsgießen zusammen.

Da beim Spritzgießen Trennmittel in den meisten Fällen nicht nötig und in machen Fällen auch nicht erwünscht sind, diese dagegen beim PU-Reaktionsgießen meist unumgänglich sind, gilt es, auch Lösungen zu finden, die beiden Verfahrenstechniken gerecht werden.

Insbesondere, wenn Formteile gespritzt werden, bei denen das Polyurethan als Umbug das Spritzgießteil zumindest teilweise beidseitig umgibt, kommen die gleichen Werkzeugteile mit dem gespritzten Kunststoff und dem Polyurethan in Berührung. Um dies zu vermeiden, bieten sich verfahrbare Einsätze und Schieber im Werkzeug an, die zunächst den Bereich für das Spritzgießen freigeben und nach einer translatorischen und/oder rotatorischen Bewegung den Bereich für das Polyurethan freigeben.

Die verfahrbaren Einsätze und Schieber können auch auf dem gespritzten Formteil abdichten und damit die sonst unvermeidliche Schwimmhaut beim PU-Bereich des Spritzgießteils vermeiden.

Sollte sich auf dem Werkzeug dennoch ein PU-Rest bilden, so wird das Werkzeug so ausgebildet, dass dieser Bereich nur auf der für das PU-Reaktionsgießen verwendeten Werkzeughälfte liegt. Das erforderliche Reinigen des Werkzeuges nach der Entformung beeinflusst in diesem Fall die Zykluszeit des Gesamtprozesses nicht.

Während das Ausführungsbeispiel auf eine Fertigung mittels eines Spritzgießwerkzeugs mit einer einzigen Kavität abstellt, ist das erfindungsgemäße Konzept natürlich auch genauso bei Mehrkavitäten-Spritzgießwerkzeugen einsetzbar.

### Bezugszeichenliste:

- 1: Plastifizier- und Einspritzschnecke
- 2: erste Werkzeughälfte
- 3: zweite Werkzeughälfte
- 4: erstes Kunststoffteil
- 5: weitere Kunststoffschicht
- 6: Vorrichtung (Block)
- 7: Werkzeughälfte der Vorrichtung 6
- 8: Werkzeughälfte der Vorrichtung 6
- 9: Werkzeughälfte der Vorrichtung 6
- 10: Werkzeughälfte der Vorrichtung 6
- 11: Formteil
- 12: Schieber
- 13: Teil der ersten Werkzeughälfte
- 14: Dichtbereich

## Patentansprüche

1. Verfahren zur Herstellung eines Formteiles aus mindestens zwei unterschiedlichen Kunststoffen, das die Schritte umfasst:
a1) Plastifizieren eines ersten Kunststoffmaterials in einer Plastifizier- und Einspritzschnecke (1);
a2) Einspritzen der gemäß Schritt a1) plastifizierten Kunststoffmasse in eine erste Kavität eines ersten Kunststoffwerkzeuges zur Herstellung eines Vorformteils (4), wobei das erste Kunststoffwerkzeug eine erste (2) und eine zweite (3) Werkzeughälfte aufweist;
a3) Öffnen des ersten Kunststoffwerkzeuges, wobei das erzeugte Vorformteil (4) auf einer der Werkzeughälften (3) verbleibt;
b) Bewegen der das Vorformteil (4) tragenden Werkzeughälfte (3) in eine Position, die eine zusammenwirkende Verbindung mit einer Werkzeughälfte (10) eines zweiten Kunststoffwerkzeugs ermöglicht;
c) Aufbringen eines weiteren Kunststoffs (5) auf das Vorformteil (4),
wobei die Werkzeughälfte (10) des zweiten Kunststoffwerkzeugs Bestandteil einer Werkzeug-Vorrichtung (6) mit einer Mehrzahl von Werkzeughälften (7, 8, 9, 10) ist, wobei die Werkzeug-Vorrichtung (6) so gedreht und/oder verschoben wird, dass eine Werkzeughälfte (10) des zweiten Kunststoffwerkzeugs unter Bildung einer zweiten Kavität zum Zusammenwirken mit einer Werkzeughälfte (3) des ersten Kunststoffwerkzeugfgebracht werden kann, so dass der weitere Kunststoff gemäß Schritt c) auf das Vorformteil (4) aufgebracht werden kann,
**dadurch gekennzeichnet, dass**
der nach Schritt c) aufgebrachte weitere Kunststoff Polyurethan ist oder aufweist, wobei über einen in der Werkzeug-Vorrichtung (6) integrierten Mischkopf das Polyurethan in die zweite Kavität eingebracht wird.

2. Verfahren nach Anspruch 1, **dadurch gekennzeichnet, dass** während des Verfahrenschrittes c) gemäß Anspruch 1 mindestens eine der Mehrzahl von Werkzeughälften (7, 8, 9) der Werkzeug-Vorrichtung (6) gereinigt wird.

3. Verfahren nach Anspruch 1, **dadurch gekennzeichnet, dass** während des Verfahrenschrittes c) gemäß Anspruch 1 auf mindestens eine der Mehrzahl von Werkzeughälften (7, 8, 9) der Werkzeug-Vorrichtung (6) ein Trennmittel aufgebracht wird.

4. Verfahren nach Anspruch 1, **dadurch gekennzeichnet, dass** während des Verfahrenschrittes c) gemäß Anspruch 1 das fertige Formteil (11) von mindestens einer der Mehrzahl von Werkzeughälften (7, 8, 9) der Werkzeug-Vorrichtung (6) entnommen wird.

5. Verfahren nach Anspruch 1, **dadurch gekennzeichnet, dass** während des Verfahrenschrittes c) gemäß Anspruch 1 auf mindestens eine der Mehrzahl von Werkzeughälften (7, 8, 9) der Werkzeug-Vorrichtung (6) eine Polyurethanschicht aufgetragen wird.

6. Vorrichtung zur Herstellung eines Formteiles (11) aus mindestens zwei unterschiedlichen Kunststoffen die umfasst:
- mindestens eine Plastifizier- und Einspritzschnecke (1),
- ein mehrteiliges erstes Kunststoffwerkzeug, wobei das erste Kunststoffwerkzeug eine erste (2) und eine zweite (3) Werkzeughälfte aufweist,
- ein zweites Kunststoffwerkzeug, das eine Mehrzahl von Werkzeughälften (7, 8, 9, 10) aufweist, wobei eine Werkzeughälfte (7, 8, 9, 10) des zweiten Kunststoffwerkzeugs unter Bildung einer Kavität zum Zusammenwirken mit einer Werkzeughälfte (3) des ersten Kunststoffwerkzeug gebracht werden kann, insbesondere zur Durchführung des Verfahrens nach einem der Ansprüche 1 bis 5, wobei
eine Anzahl Werkzeughälften (7, 8, 9, 10) des zweiten Kunststoffwerkzeugs an einer beweglichen Werkzeug-Vorrichtung (6) angeordnet ist, **dadurch gekennzeichnet, dass** die Werkzeug-Vorrichtung (6) einen Mischkopf für Polyurethan umfasst, um über diesen die Kavität zu versorgen, die von einer Werkzeughälfte (7, 8, 9, 10) des zweiten Kunststoffwerkzeugs und einer Werkzeughälfte (3) des ersten Kunststoffwerkzeugs gebildet wird.

7. Vorrichtung nach Anspruch 6, **dadurch gekennzeichnet, dass** eine der Werkzeughälften (2, 3) des ersten Kunststoffwerkzeugs um eine Achse drehbar angeordnet ist.

8. Vorrichtung nach Anspruch 7, **dadurch gekennzeichnet, dass** eine Werkzeughälfte (2, 3) des ersten Kunststoffwerkzeugs Bestandteil eines Drehtisches oder einer Wendeplatte ist.

9. Vorrichtung nach Anspruch 6, **dadurch gekennzeichnet, dass** eine der Werkzeughälften (2, 3) des ersten Kunststoffwerkzeugs durch translatorische Bewegungsmittel bewegbar angeordnet ist.

10. Vorrichtung nach einem der Ansprüche 6 bis 9, **dadurch gekennzeichnet, dass** die Mehrzahl von Werkzeughälften (7, 8, 9, 10) des zweiten Kunststoffwerkzeugs um eine Achse drehbar angeordnet ist.

## Claims

1. Method for the production of a moulded part consisting of at least two different plastic materials, which comprises the steps of:
a1) Plastification of a first plastic material in a plastification and injection worm (1);
a2) Injection of the plastic material plastificated according to step a1) into a first cavity of a first plastic mould for the production of a pre-formed part (4), wherein the first plastic mould has a first (2) and a second (3) mould half;
a3) Opening of the first plastic mould, wherein the produced pre-formed part (4) remains on one of the mould halfs (3);
b) Moving of the mould half (3) which is carrying the pre-formed part (4) in a position, which allows a cooperating connection with a mould half (10) of a second plastic mould;
c) Applying of a further plastic material (5) onto the pre-formed part (4),
wherein the mould half (10) of the second plastic mould is part of a mould device (6) with a plurality of mould halfs (7, 8, 9, 10), wherein the mould device (6) is rotated and/or moved in such a way that a mould half (10) of the second plastic mould can cooperate with a mould half (3) of the first plastic mould by forming a second cavity, so that the further plastic material can be applied onto the pre-formed part (4) according to step c),
**characterized in that**
the further plastic material which is applied according to step c) is or comprises polyurethane, wherein the polyurethane is brought into the second cavity by a mixing head which is integrated in the mould device (6).

2. Method according to claim 1, **characterized in that** during the process step c) according to claim 1 at least one of the plurality of mould halfs (7, 8, 9) of the mould device (6) is cleaned.

3. Method according to claim 1, **characterized in that** during the process step c) according to claim 1 a mould release agent is applied onto at least one of the plurality of mould halfs (7, 8, 9) of the mould device (6).

4. Method according to claim 1, **characterized in that** during the process step c) according to claim 1 the finished moulded part (11) is removed from at least one of the plurality of mould halfs (7, 8, 9) of the mould device (6).

5. Method according to claim 1, **characterized in that** during the process step c) according to claim 1 a layer of polyurethane is applied onto at least one of the plurality of mould halfs (7, 8, 9) of the mould device (6).

6. Device for the production of a moulded part (11) consisting of at least two different plastic materials, which comprises:
- at least one plastification and injection worm (1),
- a multi-part first plastic mould, wherein the first plastic mould comprises a first (2) and a second (3) mould half,
- a second plastic mould, which comprises a plurality of mould halfs (7, 8, 9, 10), wherein a mould half (7, 8, 9, 10) of the second plastic mould can be brought into a cooperating position with a mould half (3) of the first plastic mould by forming a cavity, especially for the performance of the method according to one of claims 1 till 5,
wherein a plurality of mould halfs (7, 8, 9, 10) of the second plastic mould is arranged at a movable mould device (6),
**characterized in that**
the mould device (6) comprises a mixing head for polyurethane for supplying the cavity via the same, which cavity is formed by a mould half (7, 8, 9, 10) of the second plastic mould and a mould half (3) of the first plastic mould.

7. Device according to claim 6, **characterized in that** one of the mould halfs (2, 3) of the first plastic mould is arranged rotatable around an axis.

8. Device according to claim 7, **characterized in that** a mould half (2, 3) of the first plastic mould is part of a rotary table or of a turning plate.

9. Device according to claim 6, **characterized in that** one of the mould halfs (2, 3) of the first plastic mould is arranged movable by translational moving means.

10. Device according to one of claims 6 till 9, **characterized in that** the plurality of mould halfs (7, 8, 9, 10) of the second plastic mould is arranged rotatable around an axis.

## Revendications

1. Procédé de fabrication d'une pièce moulée constituée d'au moins deux matières synthétiques différentes, le procédé comportant les étapes qui consistent à :
a1) plastifier une première matière synthétique dans une vis de plastification et d'injection (1),
a2) injecter la pâte de matière synthétique plastifiée de l'étape a1) dans une première cavité d'un premier outil à matière synthétique pour préparer une pièce d'ébauche (4), le premier outil à matière synthétique présentant une première moitié d'outil (2) et une deuxième moitié d'outil (3),
a3) ouvrir le premier outil à matière synthétique, la pièce d'ébauche (4) formée restant sur la moitié d'outil (3),
b) déplacer la moitié d'outil (3) qui porte la pièce d'ébauche (4) en une position qui permet une liaison de coopération avec une moitié d'outil (10) d'un deuxième outil à matière synthétique,
c) application d'une autre matière synthétique (5) sur la pièce d'ébauche (4), la moitié d'outil (10) du deuxième outil à matière synthétique faisant partie d'un dispositif d'outil (6) qui présente plusieurs moitiés d'outil (7, 8, 9, 10), le dispositif d'outil (6) étant tourné et/ou déplacé de telle sorte qu'une moitié d'outil (10) du deuxième outil à matière synthétique puisse être amenée à coopérer avec une moitié d'outil (3) du premier outil à matière synthétique en formant une deuxième cavité, de telle sorte que l'autre matière synthétique de l'étape c) puisse être appliquée sur la pièce d'ébauche (4), **caractérisé en ce que**
l'autre matière synthétique appliquée à l'étape c) est un polyuréthane ou présente du polyuréthane, le polyuréthane étant injecté dans la deuxième cavité par l'intermédiaire d'une tête de mélange intégrée au dispositif d'outil (6).

2. Procédé selon la revendication 1, **caractérisé en ce que** pendant l'étape de traitement c) selon la revendication 1, au moins l'une des différentes moitiés d'outil (7, 8, 9) du dispositif d'outil (6) est nettoyée.

3. Procédé selon la revendication 1, **caractérisé en ce que** pendant l'étape de traitement c) selon la revendication 1, un agent de démoulage est appliqué sur au moins l'une des différentes moitiés d'outil (7, 8, 9) du dispositif d'outil (6).

4. Procédé selon la revendication 1, **caractérisé en ce que** pendant l'étape de traitement c) selon la revendication 1, la pièce moulée (11) terminée est enlevée d'au moins l'une des différentes moitiés d'outil (7, 8, 9) du dispositif d'outil (6).

5. Procédé selon la revendication 1, **caractérisé en ce que** pendant l'étape de traitement c) selon la revendication 1, une couche de polyuréthane est appliquée sur au moins l'une des différentes moitiés d'outil (7, 8, 9) du dispositif d'outil (6).

6. Dispositif de fabrication d'une pièce moulée (11) constituée d'au moins deux matières synthétiques différentes, et comprenant :
- au moins une vis de plastification et d'injection (1),
- un premier outil à matière synthétique en plusieurs pièces, le premier outil à matière synthétique présentant une première moitié d'outil (2) et une deuxième moitié d'outil (3),
- un deuxième outil à matière synthétique qui présente plusieurs moitiés d'outil (7, 8, 9, 10), une moitié d'outil (7, 8, 9, 10) du deuxième outil à matière synthétique pouvant être amenée à coopérer avec une moitié d'outil (3) du premier outil à matière synthétique pour former une cavité, en particulier en vue de l'exécution du procédé selon l'une des revendications 1 à 5, plusieurs moitiés d'outil (7, 8, 9, 10) du deuxième outil à matière synthétique étant disposées sur un dispositif mobile d'outil (6),
**caractérisé en ce que**
le dispositif d'outil (6) comporte une tête de mélange à polyuréthane qui alimente la cavité formée par une moitié d'outil (7, 8, 9, 10) du deuxième outil à matière synthétique et une moitié d'outil (3) du premier outil à matière synthétique.

7. Dispositif selon la revendication 6, **caractérisé en ce qu'**une des moitiés d'outil (2, 3) du premier outil à matière synthétique est disposée de manière à pouvoir tourner autour d'un axe.

8. Dispositif selon la revendication 7, **caractérisé en ce qu'**une moitié d'outil (2, 3) du premier outil à matière synthétique fait partie d'une table rotative ou d'une plaque tournante.

9. Dispositif selon la revendication 6, **caractérisé en ce que** l'une des moitiés d'outil (2, 3) du premier outil à matière synthétique est disposée de manière à pouvoir être déplacée par des moyens de déplacement en translation.

10. Dispositif selon l'une des revendications 6 à 9,
**caractérisé en ce que** les différentes moitiés d'outil (7, 8, 9, 10) du deuxième outil à matière synthétique sont disposées de manière à pouvoir tourner autour d'un axe.
